# EUROPEAN PATENT APPLICATION

(11) **EP 0 522 771 A1**
(43) Date of publication of application: **13.01.1993**
(21) Application number: 92306021.4
(22) Date of filing: 30.06.1992
(51) Int. Cl.: B32B 7/08, A47G 27/04

(54) **Composite sheet material**

(30) Priority: 04.07.1991 GB 9114472
(71) Applicant: SCOTT & FYFE LIMITED, Tayport Fife DD6 9DQ Scotland (GB)
(72) Inventor: Tough, William Hamish, Craig Bank, Fife, Scotland DD6 9JE (GB); Tough, David Peter, Fife, Scotland DD6 9AR (GB)
(74) Representative: Boydell, John Christopher

(57) **Abstract**

A planar composite sheet material having enhanced mechanical properties as a backing material for a carpet underlay comprises a crepe sheet material and a plain sheet material, preferably crepe paper and plain paper, a surface of the plain sheet material being maintained in contact with the surface of the crepe sheet material by side-by-side rows of stitches formed through both the crepe sheet material and the plain sheet material. The side-by-side rows of stitches are transverse to the crimps in the crepe sheet material and are effective to give dimensional stability to the crepe sheet material.

In one embodiment both sheet materials are deformed so that rows of rounded projections, which are raised in both sheet materials, lie between at least some of the side-by-side rows of stitches, both sheet materials being deformed without being punctured. Advantageously there is at least one row of rounded projections raised in both sheet materials between each pair of side-by-side rows of stitches.

## Description

This invention relates to a composite sheet material suitable for use as a backing material for a carpet underlay. More particularly this invention relates to a composite sheet material which includes a stitched crepe paper.

In this Specification the term "crepe paper" is used to denote a paper with a crinkled or puckered texture. Crepe paper is formed by doctoring a paper web continuously from a cylinder to introduce crimps which are short overlapping wrinkles in the surface of the paper. The crepe paper is essentially planar but has a crinkled surface resulting from the crimps formed by the doctor blade.

The present Applicants previously developed a stitched crepe paper as a backing material for a carpet underlay as described and claimed in U.K. Patent No. 1,422,940. The stitched crepe paper has a pleasing appearance to the customer for the carpet underlay because the ability of the crepe paper to stretch longitudinally enables successful needling of the paper without tearing of the paper. The substantially inextensible rows of stitches which are transverse to the crimps in the crepe paper give the stitched crepe paper longitudinal dimensional stability in normal use. In addition to dimensional stability, this stitched crepe paper is capable of adhesion to a sheet of foamed or sponge rubber, both these qualities being particularly desirable in a backing for a carpet underlay.

In U.K. Patent No. 2,182,071 the present Applicants describe and claim a method of stitching a plain paper without tearing the plain paper during the stitching operation and making an unsightly stitched product. U.K. Patent No. 2,182,071 describes and claims a method of producing composite sheet material from either plain paper or creped paper by increasing the length of paper fed to a stitching machine such that, when the stitches are formed, there is entrapped, within each stitch in each longitudinal row of stitches formed in the sheet material, a portion of fed sheet material having a length greater than the length of the completed stitch.

In the method of U.K. Patent No. 2,182,071 the length of the plain paper sheet material is increased within the stitching machine either by positive movement of the paper sheet material by the stitching needle or by over-feeding the paper sheet material to the stitching machine so that an increased length of the paper sheet material is entrapped within the stitch.

The method of U.K. Patent No. 2,182,071 inevitably introduces into the stitched paper product a series of transverse tubular ribs which extend across the width of the composite sheet material giving the final stitched paper product effectively a greater thickness than the original unstitched paper. This greater thickness results from the presence of the tubular ribs which arise from deformation of the paper from the planar condition.

In this U.K. Patent No. 2,182,071 there is further described the use of a plurality of sheets of paper, which, when two sheets of paper are used, may be either both plain paper or both creped paper or one plain paper and one creped paper. The use of three sheets of paper is also described in U.K. Patent No. 2,182,071.

Products produced by the method claimed in U.K. Patent No. 2 182 071 are described and claimed in our U.K. Patents Nos. 2,209,350 and 2,209,351 and have a longitudinal series of laterally extending deformed tubular ribs formed therein. Such tubular ribs are to be distinguished from the crimps present in crepe paper and which derive from the usual creping process. By comparison with the crimps present in crepe paper, the tubular ribs have substantially greater dimensions. The products of these Patents, which may be based on plastics film or paper, have clearly visible ribs or corrugations so that the products no longer have a planar appearance. The presence of these ribs gives the products a physical structure such that they have significantly greater transverse flexural rigidity than the stitched crepe paper product.

Of these known products it is the stitched crepe paper product of U.K. Patent No. 1,422,940 which is used commercially as a backing material for resilient elastomeric sheet material such as foamed or sponge rubber sheet in the manufacture of carpet underlay. In order to improve the physical properties of the planar stitched crepe paper product, and particularly its dimensional stability and flexural rigidity, it has been proposed to use a higher weight crepe paper as a backing material. Such attempts however have had only limited success.

The present Applicants have now surprisingly found that substantially enhanced dimensional stability and flexural rigidity, both longitudinally and transversely, may be obtained in an essentially planar product by including a plain sheet material such as plain paper with the crepe sheet material in producing a composite sheet material by the method of U.K. Patent No. 1,422,940. These improvements are achieved despite the fact that the plain sheet material inevitably suffers greater damage during stitching than the crepe sheet material.

According to the present invention there is provided a composite sheet material which is suitable for use as a backing material for a carpet underlay and which comprises a crepe sheet material and a plain sheet material, a surface of the plain sheet material being maintained in contact with a surface of the crepe sheet material by side-by-side rows of stitches formed through both the crepe sheet material and the plain sheet material, the side-by-side rows of stitches being effective to give dimensional stability to the creped sheet material, and the composite sheet material being a planar material.

The composite sheet material in accordance with the present invention and having the improved dimensional and flexural properties has particular application in the manufacture of carpet underlay. According to this aspect of the present invention there is provided a carpet underlay comprising a resilient elastomeric sheet material and a planar backing material adhered to the resilient elastomeric sheet material, the planar backing material comprising a crepe sheet material having crimps in the surface thereof and a plain sheet material maintained in surface contact with the crepe sheet material by side-by-side rows of stitches formed through both the crepe sheet material and the plain sheet material, the side-by-side rows of stitches being substantially transverse to the crimps in the crepe sheet material, and the plain sheet material being adhered to the resilient elastomeric sheet material.

The composite sheet material in accordance with the present invention, which is the backing material of the carpet underlay, preferably includes weft yarns secured on the surface of the plain sheet material opposite to the surface of the plain sheet material which is maintained in contact with the surface of the crepe sheet material by the side-by-side rows of stitches. In the carpet underlay such weft yarns are therefore in contact with the rubber material and it is the crepe sheet material of pleasing appearance which is seen by the customer choosing to purchase carpet underlay.

Both the plain sheet material and the crepe sheet material in a composite sheet material in accordance with the present invention may be deformed so that rows of rounded projections, raised in both sheet materials, lie between at least some of the side-by-side rows of stitches, both sheet materials being deformed without being punctured. Such rounded projections may be formed in both sheet materials by the method described and claimed in the present Applicants' U.K. Patent No. 2 212 823. Such rounded projections enhance the appearance of the composite sheet material and any consequential enlargement of the stitching holes in the plain sheet material does not significantly detract from the enhanced physical properties of the composite sheet material in accordance with the present invention, as compared with the commercially used stitched crepe paper product according to U.K. Patent No. 1 422 940.

In the preferred embodiment in accordance with this feature of the present invention either one or two rows of rounded projections are raised in both sheet materials between each pair of side-by-side rows of stitches so that each row of stitches is separated from the adjacent row of stitches by at least one row of rounded projections. However, the rows of rounded projections raised in both sheet materials may lie between alternate pairs.

The creped sheet material and the plain sheet material are preferably both paper sheet materials. However other cohesive sheet materials may be used, that is to say sheet materials having a cohesion adequate to enable them to be handled as sheet materials and to provide dimensional stability, for example plastics film may be employed. The composite sheet material of the present invention may combine a creped sheet of one cohesive sheet material in combination with a plain sheet of another cohesive sheet material. The following description will refer to the presently preferred embodiment which comprises sheets of crepe paper and plain paper, although the comments made are generally applicable to other embodiments of the invention.

The composite sheet material of the preferred embodiment of the present invention, which may have raised rounded projections in sheets of both crepe paper and plain paper, has enlarged stitching holes formed in the plain paper sheet material. In the composite sheet material of the present invention both the plain paper sheet and the crepe paper sheet are planar sheets and the composite sheet material is therefore also a planar sheet material. The composite sheet material of the present invention contains no corrugations or ribs formed in either of the plain or crepe sheets.

The presence of the plain paper sheet in the composite sheet material of the present invention provides a product having enhanced mechanical properties in all directions as compared with a composite sheet material consisting of only a stitched crepe paper sheet material with raised rounded projections formed in it. When the composite sheet material of the present invention is used as a backing material in carpet underlay, the enhanced mechanical properties cause a load which is applied vertically over a small area to be spread over a greater area of the foamed or sponge rubber than in conventional carpet underlays, thus reducing the compression of the rubber at any given point. In consequence the ability of the underlay to recover from compressive loads is enhanced, and the underlay gives an improved underfoot performance in use.

The presence of the plain paper sheet also results in the composite sheet material of the present invention having enhanced dimensional stability, in that it resists forces tending to distort the composite sheet material from a rectangular shape to a parallelogram shape, in addition to forces tending to increase the dimensions of any of the sides of a rectangular shape. The presence of the plain paper sheet minimises extension of the composite sheet material in all directions whilst retaining the bulk of the crepe paper sheet.

It may be advantageous in a composite sheet material according to the present invention to include additional sheets of either plain or crepe paper.

A composite sheet material according to the present invention preferably further includes weft threads. Weft threads may be laid on the exposed surface of either the plain paper or the crepe paper sheet or may be trapped between the plain paper sheet and the crepe paper sheet. The rows of stitches are effective to secure the weft threads to the composite sheet material, either by directly securing them to the exposed surface of one of the paper sheets or by trapping them between the plain paper sheet and the crepe paper sheet.

A composite sheet material for use as a backing material for a carpet underlay in accordance with the present invention may be produced by a method comprising the steps of feeding a crepe sheet material and a plain sheet material simultaneously to a stitching machine with surface contact between the crepe sheet material and the plain sheet material, forming sideby-side rows of stitches to secure said sheet materials to one another, and simultaneously deforming the contacting sheet materials without puncturing either sheet material to form rows of raised rounded projections in both sheet materials between at least some of the pairs of side-by-side rows of stitches.

Preferably, a crepe paper sheet material and a plain paper sheet material are fed simultaneously to the stitching machine.

Composite sheet material according to the present invention is preferably formed by feeding both a crepe paper sheet and a plain paper sheet simultaneously to a Malimo stitch-bonding machine. If it is desired that the product shall have the rounded projections embossed in it, then a crepe paper sheet and a plain paper sheet are fed simultaneously to a stitching machine constructed and arranged to operate substantially as described in our previously published U.K. Patent Application No. 2 212 823.

In a particular embodiment of the present invention a composite sheet material comprises a plain paper sheet having a weight of 70 gsm and a crepe paper sheet formed by creping a plain paper sheet of weight 70 gsm into a creped paper sheet of weight 80 gsm. Weft yarns of 150 dtex polyester are laid on the exposed surface of the plain paper sheet and the two paper sheets are secured together by stitches formed from 150 dtex polyester with a 5 mm stitch length. The gauge of the stitches may be 5 gauge, 7 gauge or 3.3 gauge.

In an alternative embodiment of the present invention the paper sheets used above are substituted by a plain paper sheet of weight 70 gsm and a creped paper sheet formed by creping plain paper of weight 39 gsm to a creped weight of 60 gsm.

## Claims

1. A composite sheet material suitable for use as a backing material for a carpet underlay comprises a crepe sheet material and a plain sheet material, a surface of the plain sheet material being maintained in contact with a surface of the crepe sheet material by side-by-side rows of stitches formed through both the crepe sheet material and the plain sheet material, the side-by-side rows of stitches being effective to give dimensional stability to the creped sheet material and the composite sheet material being a planar material.

2. A composite sheet material according to Claim 1, wherein both sheet materials are deformed so that rows of rounded projections, raised in both sheet materials, lie between at least some of the side-by-side rows of stitches, both sheet materials being deformed without being punctured.

3. A composite sheet material according to Claim 2 wherein at least one row of rounded projections is raised in both sheet materials between each pair of side-by-side rows of stitches.

4. A composite sheet material according to any one of Claims 1 to 3 wherein the crepe sheet material is a sheet of crepe paper and the plain sheet material is a sheet of plain paper.

5. A composite sheet material according to any one of Claims 1 to 3 wherein the crepe sheet material is a sheet of crepe plastics film and the plain sheet material is a sheet of plain plastics film.

6. A composite sheet material according to Claim 4 which includes an additional sheet of either plain or crepe paper.

7. A composite sheet material according to any one of Claims 1 to 6 which further includes weft threads.

8. A composite sheet material according to Claim 7 wherein the weft threads are secured to an exposed surface of the sheet material by the side-by-side rows of stitches.

9. A carpet underlay comprising a resilient elastomeric sheet material and a planar backing material adhered to the resilient elastomeric sheet material, the planar backing material comprising a crepe sheet material having crimps in the surface thereof and a plain sheet material maintained in surface contact with the crepe sheet material by side-by-side rows of stitches formed through both the crepe sheet material and the plain sheet material, the side-by-side rows of stitches being substantially transverse to the crimps in the crepe sheet material, and the plain sheet material being adhered to the resilient elastomeric sheet material.

10. A carpet underlay according to Claim 9 wherein the planar backing material includes weft yarns secured on the surface of the plain sheet material opposite to the surface of the plain sheet material which is maintained in contact with the surface of the crepe sheet material by the side-by-side rows of stitches.

11. A carpet underlay according to Claim 9 or Claim 10 wherein the planar backing material comprises a crepe paper sheet material and a plain paper sheet material.
